(19) Europäisches Patentamt
European Patent Office
Office européen des brevets

(11) EP 0 769 526 B1

(12) EUROPÄISCHE PATENTSCHRIFT

(45) Veröffentlichungstag und Bekanntmachung des Hinweises auf die Patenterteilung:
**16.05.2001 Patentblatt 2001/20**

(51) Int Cl.[7]: **C08L 69/00**, C08L 53/00, C08L 51/04

(21) Anmeldenummer: **96116043.9**

(22) Anmeldetag: **07.10.1996**

# (54) Flammgeschützte, spannungsrissbeständige Polycarbonat/ABS-Blends

Flame-retardant, stress-crack resistant blends of polycarbonate/ABS

Mélanges de polycarbonate et d'ABS, ignifuges et résistant à la fissuration

(84) Benannte Vertragsstaaten:
**DE ES FR IT**

(30) Priorität: **19.10.1995 DE 19538892**

(43) Veröffentlichungstag der Anmeldung:
**23.04.1997 Patentblatt 1997/17**

(73) Patentinhaber: **BAYER AG**
**51368 Leverkusen (DE)**

(72) Erfinder:
- **Köhler, Burkhard, Dr.**
  **51373 Leverkusen (DE)**
- **Kirsch, Jürgen, Dr.**
  **51375 Leverkusen (DE)**
- **Weider, Richard, Dr.**
  **51381 Leverkusen (DE)**
- **Wittmann, Dieter, Dr.**
  **51375 Leverkusen (DE)**
- **Beicher, Horst**
  **47918 Tönisvorst (DE)**

(56) Entgegenhaltungen:
**EP-A- 0 363 608** **DE-A- 4 424 399**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft flammgeschützte, spannungsrißbeständige Polycarbonat/-ABS-Blends, wobei die Polycarbonate ganz oder teilweise mit Halogenbutylkautschukblöcken modifiziert sind.

Mischungen aus Polycarbonat und Pfropfpolymeren sind allgemein bekannt (z.B. DE 1 170 141). Diese Mischungen haben eine für manche Anwendungen nicht ausreichende Flammfestigkeit und Spannungsrißbeständigkeit.

Ferner sind mit Polyisobutylen modifizierte Polycarbonate bekannt (z.B. EP-A 305 718, DE-OS 3 618 378 (= US-P 4 798 873)).

Die Aufgabe der vorliegenden Erfindung ist die Bereitstellung von Formmassen auf Basis Polycarbonat und Pfropfpolymeren mit hoher Flammfestigkeit und Spannungsrißbeständigkeit.

Es wurde nun gefunden, daß Mischungen aus mit Halogenbutylkautschuken modifizierten Polycarbonaten, gegebenenfalls unmodifizierten Polycarbonaten, Pfropfpolymeren, gegebenenfalls anderen thermoplastischen Polymerisaten, Flammschutzadditiven, wie z.B. Phosphorsäureestern und/oder Teflon, eine überraschend hohe Spannungsrißbeständigkeit bei vollständigem Erhalt der Flammfestigkeit aufweisen.

Gegenstand der vorliegenden Erfindung sind thermoplastische Formmassen, enthaltend

A) 5 bis 90, vorzugsweise 30 bis 85 Gew.-Teile Blockcopolycarbonate aus Polycarbonat-Blöcken und 0,5 bis 30, bevorzugt 1 bis 25, insbesondere 4 bis 20 Gew.-% (bezogen auf das Blockcopolycarbonat) Polyisobutylen-alpha-halogen-ketocarbonsäure-Blöcke (PIB-Blöcke), wobei die Polyiso-butylen-alpha-halogen-ketocarbonsäure-Blökke mittlere Molekulargewichte Mn (Zahlenmittel) zwischen 500 und 50 000, Halogengehalte (Chlor oder Brom) vor dem Einbau zwischen 0,1 und 15, bevorzugt 0,5 und 5 Gew.-% (bezogen auf PIB-Block) und Säurezahlen zwischen 2 und 250 mg KOH/g aufweisen,

B) 5 bis 95, vorzugsweise 8 bis 90, insbesondere 8 bis 35 Gew.-Teile Pfropfpolymerisat einer Mischung aus

B.1.1 50 bis 95, vorzugsweise 60 bis 90, Gew.-Teilen Styrol, α-Methylstyrol, halogen- oder methylkernsubstituiertem Styrol, $C_1$-$C_8$-Alkylmethacrylat, insbesondere Methylmethacrylat, $C_1$-$C_8$-Alkyl-acrylat, insbesondere Methacrylat, oder Mischungen dieser Verbindungen und

B.1.2 5 bis 50, vorzugsweise 10 bis 40, Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methacrylat, Maleinsäureanhydrid, $C_1$-$C_4$-alkyl- bzw. phenyl-N-substituierte Maleinimide oder Mischungen dieser Verbindungen auf

B.2 5 bis 95, vorzugsweise 20 bis 70, Gew.-Teilen Polymerisat auf Dien- und/oder Alkylacrylat-Basis mit einer Glasübergangstemperatur unter -10°C.

C) 0 bis 20 Gew.-Teile Kautschuk verschieden von B)

D) 0 bis 70 Gew.-Teile eines Copolymerisats aus

D.1 50 bis 98, vorzugsweise 60 bis 95, Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus und

D.2 50 bis 2, vorzugsweise 40 bis 5, Gew.-Teilen Acrylnitril, Methacrylntiril, $C_1$-$C_8$-Alkylmethacrylaten, $C_1$-$C_8$-Alkylacrylaten, Maleinsäureanhydrid, N-substituierten Maleinimiden und Mischungen daraus,

E) 0 bis 80 Gew.-Teile aromatisches Polycarbonat,

F) 1 bis 20, vorzugsweise 1 bis 18, insbesondere 2 bis 15 Gew.-Teile monomere oder oligomere Phosphorsäureester oder Phosphonsäureester mit Molmassen von 250 bis 10 000 g/mol,

G) 0,05 bis 5, vorzugsweise 0,1 bis 1 Gew.-Teile fluoriertes Polyolefin,

wobei die Summe der Komponenten A + B + C + D + E + F + G 100 ergibt.

### Komponente A

Die erfindungsgemäßen Blockcopolycarbonate werden hergestellt, indem man der Polykondensationsreaktion, d.h. der Herstellung von Polycarbonaten aus Diphenolen, Phosgen, Kettenabbrechern und gegebenenfalls Verzweigern, die Polyiso-butylen-α-halogen-ketocarbonsäuren zusetzt.

Der Einbau der PIB-Blöcke in die Polymerkette während der Phasengrenzflächen-Polykondensation erfolgt über Esterbindungen und zusätzlich durch Ersatz von Halogen über Etherbindungen.

Das Molekulargewicht $\overline{M}_w$ (Gewichtsmittel, ermittelt durch Lichtstreuung) der so hergestellten Blockcopolycarbonate liegt im allgemeinen zwischen 8000 und 150.000 bzw. die Blockcopolycarbonate haben eine relative Lösungsviskosität von 1,15 bis 1,5 (ermittelt an einer 0,5 %igen Lösung in Methylenchlorid bei 25°C).

Die Polyisobutylen-α-halogen-ketocarbonsäuren lassen sich z.B. durch oxidative Spaltung von Halobutylkautschuken nach bekannten Verfahren erhalten. In einem besonders geeigneten Verfahren wird zur oxidativen Spaltung Ozon verwendet.

Die zur Herstellung benötigten Halobutylkautschuke sind kommerziell verfügbare hochmolekulare, feste Polymerisate, die durch Copolymerisation von Isobutylen mit 0,3 bis 15 Mol-% Isopren und anschließender vorsichtiger Halogenierung in Allylstellung mit elementarem Brom oder Chlor in Lösung erhältlich sind. Das Isopren liegt dabei im wesentlichen in der 1,4-Position verknüpft vor. Geringe Anteile 1,2-Verknüpfung, wie sie in allen kommerziell erhältlichen Butylkautschuken vorhanden ist und die sich nicht vollständig unterdrücken läßt, führen zu ebenfalls geringen Anteilen seitenständiger Carboxylgruppen in den Oxidationsprodukten. Der Halogengehalt in den Halobutylkautschuken beträgt zwischen 0,1 und 15 Gew.-%, bevorzugt zwischen 0,5 und 5 Gew.-%. Die Mooney-Viskosität der Halobutylkautschuke liegt zwischen 30 und 80 (ML 1+8, 125°C) und das mittlere Molekulargewicht $M_n$ (Zahlenmittel, bestimmt durch Gelpermeationschromatographie) zwischen 20.000 und 1.000.000, bevorzugt zwischen 100.000 und 500.000. Geeignete Halobutylkautschuke sind z.B. in Ullmann's Encyclopedia of industrial Chemistry, Vol. A23 (1993), S. 314 ff. beschrieben. Neben Isopren sind auch andere 1,3-Diene als Comonomere geeignet, solche Produkte sind aber nicht kommerziell verfügbar. Geeignete Comonomere sind z.B. in H. Güterbock, "Polyisobutylen und Isobutylen-Mischpolymerisate", Springer Verlag, Berlin 1959 genannt.

Durch die oxidative Behandlung von Halobutylykautschuklösungen mit Ozon werden die Halobutylkautschuke an den noch vorhandenen Doppelbindungen unter Reduzierung des Molekulargewichts und Bildung von Carboxyl- Keton- oder Adlehydgruppen gespalten. In α-Stellung zu den Carboxyl- oder Carbonylgruppen befindet sich je nach verwendetem Ausgangspolymerisat Chlor oder Brom.

Die Säurezahl und das Molekulargewicht der so erhältlichen Polyisobutylen-α-halogen-ketocarbonsäuren ist vom Gehalt an Isopren bzw. Dien im Copolymeren und dem gewählten Ozonüberschuß abhängig. Sie liegt im allgemeinen zwischen 2 und 250 mg KOH/g, bevorzugt zwischen 2 und 100 mg KOH/g, besonders bevorzugt zwischen 2 und 50 mg KOH/g. Das Molekulargewicht $\overline{M}_n$ (Zahlenmittel, bestimmt durch HPGPC) der Produkte liegt im allgemeinen zwischen 500 und 50.000, bevorzugt zwischen 1.000 und 10.000, der Halogengehalt entspricht dem der eingesetzten Halobutylkautschuke.

Erfindungsgemäß geeignete, thermoplastische, aromatische Polycarbonate sind solche auf Basis der Diphenole der Formel (I)

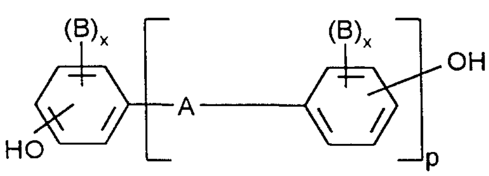

(I)

worin

A eine Einfachbindung, $C_1$-$C_5$-Alkylen, $C_2$-$C_5$-Alkyliden, $C_5$-$C_6$-Cycloalkyliden, -S- oder -$SO_2$-,

B Chlor, Brom

x 0, 1 oder 2 und

p 1 oder 0 sind

oder alkylsubstituierte Dihydroxyphenylcycloalkane der Formel (II),

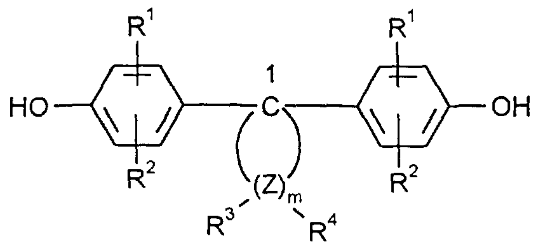

(II)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes Z individuell wählbar, unabhängig voneinander Wasserstoff oder $C_1$-$C_6$-Alkyl

und

Z Kohlenstoff bedeuten, mit der Maßgabe, daß an mindestens einem Atom Z $R^3$ und $R^4$ gleichzeitig Alkyl bedeuten.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und $\alpha,\alpha$-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\alpha,\alpha$-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
a,a'-Bis-(3,5-dimethyl-4-hydroxyphenyl)-p-diisopropyl-benzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methyl-cyclohexan, 2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

1,1-Bis-(4-hydroxyphenyl)-3,3,5-trimethylcyclohexan,
1,1-Bis-(4-hydroxyphenyl)-3-methylcyclohexan,
1,1-Bis-(3,5-dimethyl-4-hydroxyphenyl)-4-methylcyclohexan.

Insbesondere ist 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1-Tri-(4-hydroxyphenyl)-ethan, 2,6-Bis-(2-hydroxy-5'-methyl-benzyl)-4-methylphenol, 2-(4-Hydroxyphenyl)-2-(2,4-dihydroxyphenyl)-pro-pan, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die Herstellung der erfindungsgemäßen Blockpolycarbonate kann im wesentlichen nach dem bekannten Lösungsverfahren in disperser Phase (sogenanntes Zweiphasengrenzflächenverfahren) (vgl. H. Schnell, "Chemistry and Physics of Polycarbonates", Polymer Review, Vol. IX, Seite 27 ff., Interscience Publ. 1964) erfolgen:

Hierbei werden die einzusetzenden Diphenole in wäßriger alkalischer Phase gelöst. Dazu werden die zur Herstellung der erfindungsgemäßen Polycarbonate erforderlichen Kettenabbrecher in Mengen von 1 bis 20 Mol-%, bezogen auf Mole Diphenol, in einem organischen Lösungsmittel gelöst oder in Substanz, zugegeben. Dann wird in Gegenwart einer inerten, vorzugsweise Polycarbonat-lösenden, organischen Phase mit Phosgen umgesetzt. Die Reaktionstemperatur liegt zwischen 0°C und 40°C. Die Polyisobutylen-$\alpha$-halogen-ketocarbonsäuren werden in gewünschter Menge der Reaktion zugesetzt als Reinsubstanz oder im die organische Phase bildenden Lösemittel gelöst.

Die Zugabe der erforderlichen Kettenabbrecher in Art und Menge wie oben angegeben, kann auch während der Phosgenierung erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Werden Verzweiger mitverwendet, so kann deren Zugabe vor der Umsetzung mit Phosgen oder während der Phosgenierung erfolgen.

Neben oder anstelle der Diphenole können auch deren Chlorkohlensäureester eingesetzt werden.

Die Isolierung der erfindungsgemäßen Blockcopolycarbonate erfolgt in bekannter Weise. Geeignete Aufarbeitungsverfahren sind insbesondere das Ausfällen, die Sprühtrocknung und das Verdampfen des Lösungsmittels im Vakuum.

Neben den Diphenolen können auch bis zu 50 Mol-%, bezogen auf die eingesetzten Diphenole, von deren Bischlorkohlensäureestern eingesetzt werden.

## Komponente B

Bevorzugte Pfropfgrundlagen sind Polybutadiene, Butadien/Styrol-Copolymerisate und Acrylatkautschuke. Die Pfropfgrundlage ist teilchenförmig und hat in der Regel einen mittleren Teilchendurchmesser ($d_{50}$) von 0,05 bis 5 µm, vorzugsweise 0,1 bis 0,8 µm.

Die Pfropfgrundlage kann neben Butadien bis zu 50 Gew.-% Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage besteht aus reinem Polybutadien.

Bevorzugte Pfropfpolymerisate B sind z.B. mit Styrol und/oder Acrylnitril und/oder (Meth-)Acrylsäurealkylestern gepfropfte Grundlagen B.2 wie Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymeri-sation der Pfropfmonomere in Gegenwart der Pfropfgrundlage gewonnen werden.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Die Acrylatkautschuke (Pfropfgrundlage B.2) sind vorzugsweise Polymerisate aus Acrylsäurealkylestern, gegebenenfalls mit bis zu 40 Gew.-% anderer polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Die Menge der vernetzten Monomere beträgt vorzugsweise 0,02 bis 5, insbesondere 0,05 bis 2 Gew.-%, bezogen auf die Pfropfgrundlage.

## Komponente C

Als Kautschuke gemäß Komponente C werden gegebenenfalls vorzugsweise Ethylen-Vinylacetat-Copolymere, Polyisobutylenkautschuke, epoxyfunktionelle Ethylen-Acrylat-Terpolymere, besonders bevorzugt Polyisobutylen-Kautschuke eingesetzt.

Die Ethylen-Vinylacetat-Copolymeren weisen Vinylacetat-Gehalte von 20 bis 80 Gew.-% auf. Die epoxyfunktionellen Ethylen-Acrylat-Copolymeren haben einen Ethylengehalt von 60 bis 90 Gew.-%, einen Acrylatgehalt von 8 bis 38 Gew.-% und einen Anteil an epoxyfunktionellen Monomer, vorzugsweise Polyacrylmethacrylat von 2 bis 15 Gew.-%. Die Polyisobutylenkautschuke bestehen zu 85 bis 100 Gew.-% aus kationisch polymerisiertem Isobuten, dem 0 bis 15 Gew.-% Comonomere, wie z.B. Diene, m/p-Methylstyrol, Styrol, α-Methylstyrol oder Divinylbenzol, zugesetzt sein können. Das Molekulargewicht (Gewichtsmittel) $\overline{M}w$ beträgt 200.000 bis 2.000.000.

Falls die Mischung Copolymerisate gemäß Komponente C enthält, werden vorzugsweise 5 bis 20 Gew.-% (bezogen auf 100 Teile A + D + C + D + E + F) zugesetzt.

## Komponente D

Das thermoplastische Polymer D umfaßt Homopolymere oder Copolymere von einem oder mehreren ethylenisch ungesättigten Monomeren (Vinylmonomeren) wie beispielsweise Styrol, α-Methylstyrol, kernsubstituierte Styrole Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die Copolymerisate gemäß Komponente D sind harzartig, thermoplastisch und kautschukfrei.

Bevorzugte Vinyl-Copolymerisate D sind solche aus wenigstens einem Monomeren aus der Reihe Styrol, α-Methylstyrol und/oder kernsubstituiertem Styrol (D.1) mit wenigstens einem Monomeren aus der Reihe Acrylnitril, Methacrylnitril, Methylmethacrylat, Maleinsäureanhydrid und/oder N-substituiertem Maleinimid (D.2).

Besonders bevorzugte Copolymerisate D sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente D sind bekannt und lassen sich durch radikalische Polymerisation, insbesondere durch Emulsions-, Suspensions-, Lösungs- oder Massepolymerisation herstellen. die Copolymerisate gemäß Komponente D besitzen vorzugsweise Molekulargewichte $\overline{M}_w$ (Gewichtsmittel, ermittelt durch Lichtstreuung oder Sedimentation) zwischen 15 000 und 200 000.

## Komponente E

Die aromatischen Polycarbonate, die der Mischung zugesetzt werden können, entsprechen den bei der Komponente A) beschriebenen Polycarbonaten. Vorzugsweise werden 20-60 Gew.-Teile Polycarbonat zugesetzt.

## Komponente F

Die erfindungsgemäßen Polymermischungen enthalten als Flammschutzmittel vorzugsweise monomere oder oligomere Phosphate der Formel (III)

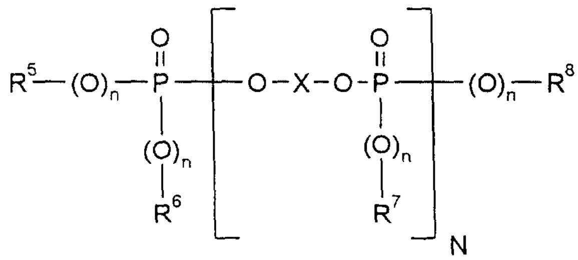

(III) .

In der Formel bedeuten $R^5$, $R^6$, $R^7$, $R^8$ unabhängig voneinander $C_1$-$C_8$-Alkyl, $C_5$-$C_6$-Cycloalkyl, $C_6$-$C_{10}$-Aryl oder $C_7$-$C_{12}$-Aralkyl, bevorzugt sind $C_6$-$C_{10}$-Aryl oder $C_7$-$C_{12}$-Aralkyl. Die aromatischen Gruppen $R^5$, $R^6$, $R^7$ und $R^8$ können ihrerseits mit Halogen- oder Alkylgruppen substituiert sein. Besonders bevorzugte Aryl-Reste sind Kresyl, Phenyl, Xylenyl, Methylphenyl, Propylphenyl, Butylphenyl oder Isooctylphenyl sowie auch die bromierten und chlorierten Derivate davon.

X in der Formel (III) bedeutet einen ein- oder mehrkernigen aromatischen Rest mit 6 bis 30 C-Atomen. Dieser leitet sich von Diphenolen ab wie z.B. Bisphenol A, Resorcin oder Hydrochinon oder auch die chlorierten oder bromierten Derivate davon.

n in der Formel (III) kann unabhängig voneinander 0 oder 1 sein, vorzugsweise ist n gleich 1.

N kann Werte zwischen 0 und 12, vorzugsweise 0 und Werte zwischen 1 und 3 einnehmen. Als erfindungsgemäße Komponente F) können auch Mischungen verschiedener oligomerer Phosphate eingesetzt werden. In diesem Fall hat N einen Durchschnittswert zwischen 0 und 12, vorzugsweise 0,5 und 2,5.

## Komponente G

Die fluorierten Polyolefine G) sind hochmolekular und besitzen Glasübergangstemperaturen von über -30°C, in der Regel von über 100°C, Fluorgehalte, vorzugsweise von 65 bis 76, insbesondere von 70 bis 76, Gew.-%, mittlere Teilchendurchmesser $d_{50}$ von 0,05 bis 1 000, vorzugsweise 0,08 bis 20 µm. Im allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl und Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10 A, Oktober 1970, Mc Graw-Hill, Inc., New York, Seite 134 und 774; "Modern Plastics Encyclopedia", 1975 bis 1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z.B. US-Patent 2 393 967.) Je nach Einsatzform kann die Dichte dieser Materialien zwischen 1,2 und 2,3 g/cm$^3$, die mittlere Teilchengröße zwischen 0,05 und 1000 µm liegen.

Bevorzugte fluorierte Polyolefine sind Tetrafluorethylenpolymerisate und haben mittlere Teilchendurchmesser von 0,05 bis 20 µm, vorzugsweise 0,08 bis 10 µm und eine Dichte von 1,2 bis 1,9 g/cm$^3$ und werden vorzugsweise in Form einer koagulierten Mischung von Emulsionen der Tetrafluorethylenpolymerisate mit Emulsionen der Pfropfpolymerisate B) eingesetzt.

Geeignete, in Pulverform einsetzbare fluorierte Polyolefine sind Tetrafluorethylenpolymerisate mit mittleren Teilchendurchmesser von 100 bis 1 000 µm und Dichten von 2,0 g/cm$^3$ bis 2,3 g/cm$^3$.

Zur Herstellung einer koagulierten Mischung aus B) und G) wird zuerst eine wäßrige Emulsion (Latex) eines Pfropfpolymerisates B) mit mittleren Latexteilchendurchmessern von 0,05 bis 2 µm, insbesondere 0,1 bis 0,6 µm, mit einer feinteiligen Emulsion eines Tetrafluorethylenpolymerisates G) in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate besitzen Feststoffgehalte von 25 bis 50 Gew.-%, vorzugsweise von 30 bis 45 Gew.-%.

Die Mengenangabe bei der Beschreibung der Komponente B) schließt den Anteil des Pfropfpolymerisats für die koagulierte Mischung aus Pfropfpolymerisat und fluorierten Polyolefinen.

In der Emulsionsmischung liegt das Gewichtsverhältnis Pfropfpolymerisat B) zum fluorierten Polyolefin G) bei 95:5 bis 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Mischungen aus den Komponenten können noch die üblichen, für Polycarbonate bzw. Butylkautschuke bzw. ABS-Polymerisate üblichen Additive zugesetzt enthalten, wie z.B. Stabilisatoren, Entformungsmittel, Alterungsschutzmittel, weitere Flammschutzmittel, Pigmente, Farbstoffe etc. Diese Additive können während der Herstellung der Mischungen zu beliebigen Formkörpern in üblichen Mengen zugesetzt werden.

Die Mischung der Komponenten und gegebenenfalls der Additive erfolgt durch Mischen in der Schmelze in Knetern oder Extrudern bei erhöhter Temperatur, im allgemeinen bei Temperaturen von 230 bis 330°C.

Gegenstand der vorliegenden Erfindung ist somit auch ein Verfahren zur Herstellung von thermoplastischen Formmassen, wobei die Komponenten sowie gegebenenfalls Stabilisatoren, Farbstoffe, Pigmente, Fließmittel, Füll- und Verstärkungsstoffe, Gleit- und Entformungsmittel, Nukleiermittel und/oder Antistatika nach erfolgter Vermischung bei Temperaturen von 230 bis 330°C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formkörpern jeder Art, z.B. durch Spritzgießen, verwendet werden. Beispiele für Formkörper sind Gehäuse von Haushaltsgeräten und elektrischen Geräten.

Gegenstand der Erfindung ist daher auch die Verwendung der Formmassen zur Herstellung von Formkörpern.

Die einzelnen Komponenten der Mischung können ganz oder teilweise aus Recyclaten oder Produktionsabfällen bestehen.

## Beispiele

Komponente A) PC/PIB-Blockcokondensat:

A 1) Herstellung einer chlorhaltigen Polyisobutylen-α-halogen-ketocarbonsäure

10 kg Chlorobutylkautschuk mit einem Chlorgehalt von 1,2 Gew.-% und einer Mooney-Viskosität von 46 (ML 1+8, 125°C) (Polysar Chlorobutyl 1255, Handelsprodukt der Bayer AG) werden in grobe Stücke (ca. 2 cm Durchmesser) zerkleinert und in 40 1 Hexan suspendiert. In die Mischung wird unter Rühren bei 15 bis 25°C ein mit Ozon angereicherter Sauerstoffstrom (1.000 1/h, Ozonmenge ca. 15 g/h) eingeleitet, bis eine Säurezahl von 11 erreicht ist. Die erforderliche Einleitzeit beträgt hierfür 40 Stunden. Während des Einleitens lösen sich die festen Anteile vollständig auf. Nach Spülen mit Stickstoff wird das Lösemittel abdestilliert. das Mittlere Molekulargewicht ($\overline{M}$n) beträgt 4 400, der Chlorgehalt beträgt 1,2 Gew.-%, Säurezahl ist 13.

A 2) Herstellung eines PC/PIB-Blockcokondensats

Man legt 8.000 g 45 %ige NaOH, 40 1 Wasser, 4560 g Bisphenol-A, 45 g tert.-Butylphenol, 564 g chlorhaltiges PIB-Telechel nach Beispiel A1), 13,2 kg Chlorbenzol und 37,2 kg Methylenchlorid vor, leitet 3.000 g Phosgen ein und kondensiert unter Zugabe von 28 ml N-Ethylpiperidin auf. Die Isolierung erfolgt wie üblich durch Ansäuern, Abtrennung der organischen Phase und Eindampfen im Ausdampfextruder.

Das Blockcopolycarbonat enthält 10 Gew.-% PIB-Anteil.

Die relative Lösungsviskosität (0,5 % in Methylenchlorid bei 25°C) beträgt 1,29.

B) ABS-Pfropfpolymerisat

Pfropfcopolymerisat von 40 Gew.-Teilen Styrol und Acrylnitril im Verhältnis 73:27 auf 60 Gew.-Teile teilchenförmigen vernetzten Polybutadienkautschuk (mittlerer Teilchendurchmesser $d_{50}$ = 0,28 μm), hergestellt durch Emulsionspolymerisation (analog Beispiel B. I der DE-OS 3 738 143).

D) SAN

Styrol/Acrylnitrilcopolymerisat mit einem Styrol/Acrylnitril-Verhältnis von 72:28 und einer Grenzviskosität von 0,55 dl/g (Messung in Dimethylformamid bei 20°C).

E) PC (Polycarbonat) auf Basis Bisphenol A

Die in den Beispielen angegebenen Werte für die relative Lösungsviskosität ($\eta_{rel}$) sind bei 25°C in Methylenchlorid an einer 0,5 %igen Lösung gemessen.

F) Phosphate:

Triphenylphosphat und m-Phenylen-bis(diphenylphosphat) im Gewichts-verhältnis 1:3.

G) Teflon/Pfropfpolymer

Tetrafluorethylenpolymerisat als koagulierte Mischung aus einer SAN Pfropfpolymerisat-Emulsion, bestehend aus einem Pfropfpolymerisat von 45 Gew.-% Styrol und Acrylnitril im Gewichts-Verhältnis 72:28 auf 55 Gew.-% teilchenförmigen vernetzten Polybutadienkautschuk (mittlerer Teilchendurchmesser $d_{50}$ = 0,4 µm), hergestellt durch Emulsionspolymerisation (analog Beispiel B.II der DE-OS 3 738 143), in Wasser und einer Tetrafluorethylenpolymerisat-Emulsion in Wasser. Das Gewichtsverhältnis Pfropfpolymerisat zu Tetrafluorethylenpolymerisat in der Mischung ist 90:10. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,5 µm. Die Emulsion des Tetrafluorethylenpolymerisats (Teflon 30 N der Fa. DuPont) wird mit der Emulsion des SAN-Pfropfpolymerisats vermischt und mit 1,8 Gew.-% bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

Stabilisator: cyclisches Phosphit

Cyclischer Phosphorigsäureester des 2,2'-Methylen-bis-(6-cyclohexyl-4-methylphenols).

Die Formmassen werden durch Mischen der Komponenten auf einem Zweiwellenextruder (ZSK 32 der Fa. Werner und Pfleiderer) bei 240°C hergestellt und anschließend bei 260°C auf einer Spitzgußmaschine zu Formkörpern verarbeitet.

Beispiele

| Beispiele (Angaben in Gew.-Teile) | A Vergleich | 1 | 2 |
|---|---|---|---|
| Blockcopolycarbonat A) | - | 49 | 49 |
| PC ($\eta_{rel}$ = 1,28) | 49 | - | - |
| PC ($\eta_{rel}$ = 1,20) | 30 | 30 | 30 |
| SAN | 5 | 5 | 5 |
| ABS-Pfropf | 5 | 5 | 5 |
| Teflon/Pfropf | 3,5 | 3,5 | 4 |
| Phosphat | 8 | 8 | 9,2 |
| cyclisches Phosphit | 0,1 | 0,1 | 0,1 |
| Pentaerythrittetrastearat | 0,5 | 0,5 | 0,5 |
| Fülldruck (260°C in bar) | 133 | 128 | 127 |
| UL 94 V | V1 | V1 | V0 |
| ESC 0,4 % 5 min | KR+OR | ohne Befund | ohne Befund |
| ESC 1,0 % 5 min | KR+OR | ohne Befund | ohne Befund |
| ESC 1,6 % 5 min | KR+OR | ohne Befund | ohne Befund |

(fortgesetzt)

| Beispiele (Angaben in Gew.-Teile) | A^Vergleich | 1 | 2 |
|---|---|---|---|
| ESC 2,0 % 5 min | Bruch | ohne Befund | ohne Befund |
| ESC 2,4 % 5 min | gebrochen | KR+OR | ohne Befund |
| ESC 2,4 % 5 min | gebrochen | KR+OR | ohne Befund |
| ak Izod RT (kJ/m$^2$) ISO 180 | 42 | 55 | 58 |
| ak Izod -10°C (kJ/m$^2$) ISO 180 | 16 | 41 | 46 |

Als Medium für die Messung des Spannungsrißverhaltens (ESC) wurde eine Mischung aus Isopropanol/Toluol 40:60 eingesetzt. KR-OR bedeutet Kanten- und Oberrisse.

Die erfindungsgemäßen Mischungen nach Beispiel 1 und 2 weisen eine deutlich verbesserte Spannungsrißbeständigkeit und Kerbschlagzähigkeit auf. Ferner ist die Fließfähigkeit, wie der geringere Fülldruck zeigt, verbessert, obwohl das verwendete Blockcopolycarbonat eine höhere relative Lösungsviskosität aufweist, als das im Vergleichsbeispiel A verwendete Polycarbonat.

## Patentansprüche

**1.** Thermoplastische Formmasse enthaltend

A) 5 bis 90 Gew.-Teile Blockcopolycarbonate aus Polycarbonat-Blöcken und 0,5 bis 30 Gew.-% (bezogen auf das Blockcopolycarbonat) Polylisobutylen-alpha-halogen-ketocarbonsäure-Blöcke, wobei die Polyisobutylen-alpha-halogen-ketocarbonsäure-Blöcke mittlere Molekulargewichte Mn (Zahlenmittel) zwischen 500 und 50 000, Halogengehalte (Chlor oder Brom) vor dem Einbau zwischen 0,1 und 15 Gew.-% (bezogen auf PIB-Block) und Säurezahlen zwischen 2 und 250 mg KOH/g aufweisen,

B) 5 bis 95 Gew.-Teile Pfropfpolymerisat einer Mischung aus

B.1.1 50 bis 95 Gew.-Teilen Styrol, α-Methylstyrol, halogen- oder methylkernsubstituiertem Styrol, $C_1$-$C_8$-Alkylmethacrylat, $C_1$-$C_8$-Alkylacrylat, insbesondere Methacrylat, oder Mischungen dieser Verbindungen und

B.1.2 5 bis 50 Gew.-Teilen Acrylnitril, Methacrylnitril $C_1$-$C_8$-Alkylmethacrylaten, $C_1$-$C_8$-Alkylacrylat, Maleinsäureanhydrid, $C_1$-$C_4$-alkyl-bzw. phenyl-N-substituierte Maleinimide oder Mischungen dieser Verbindungen auf

B.2 5 bis 95 Gew.-Teilen Polymerisat auf Dien- und/oder Alkylacrylat-Basis mit einer Glasübergangstemperatur unter -10°C.

C) 0 bis 20 Gew.-Teile Kautschuk verschieden von B)

D) 0 bis 70 Gew.-Teile eines Copolymerisats aus

D.1 50 bis 98 Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus und
D.2 50 bis 2 Gew.-Teilen Acrylnitril, Methacrylntiril, $C_1$-$C_8$-Alkylmethacrylaten, $C_1$-$C_8$-Alkylacrylaten, Maleinsäureanhydrid, N-substituierten Maleinimiden und Mischungen daraus,

E) 0 bis 80 Gew.-Teile aromatisches Polycarbonat,

F) 1 bis 20 Gew.-Teile monomere oder oligomere Phosphorsäureester oder Phosphonsäureester mit Molmassen von 250 bis 10 000 g/mol,

G) 0,05 bis 5, vorzugsweise 0,1 bis 1 Gew.-Teile fluoriertes Polyolefin,

wobei die Summe der Komponenten A + B + C + D + E + F + G 100 ergibt.

**2.** Formmassen gemäß Anspruch 1, wobei als Komponente F) Phosphorverbindungen der Formel (III)

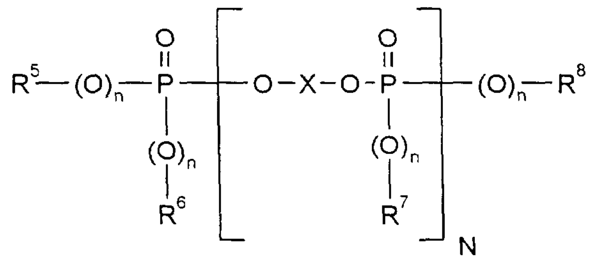

(III),

in welcher

| | |
|---|---|
| $R^5$, $R^6$, $R^7$, $R^8$ | unabhängig voneinander $C_1$-$C_8$-Alkyl, $C_5$-$C_6$-Cycloalkyl, $C_6$-$C_{10}$-Aryl oder $C_7$-$C_{12}$-Aralkyl, wobei die aromatischen Gruppen in $R^5$, $R^6$, $R^7$ und $R^8$ ihrerseits mit Halogen- oder Alkylgruppen substituiert sein können, |
| X | einen ein- oder mehrkernigen aromatischen Rest mit 6 bis 30 C-Atomen bedeutet, |
| n | unabhängig voneinander 0 oder 1 ist, |
| N | für Werte zwischen 0 und 12 steht. |

**3.** Formmassen gemäß Anspruch 2, wobei $R^5$, $R^6$, $R^7$, $R^8$ unabhängig voneinander für Kresyl, Phenyl, Xylenyl, Methylphenyl, Propylphenyl, Butylphenyl oder Isooctylphenyl sowie chlorierte und bromierte Derivate davon stehen, und X sich von Bisphenol A, Resorcin oder Hydrochinon ableitet.

**4.** Formmassen gemäß Anspruch 1, wobei Komponente G) in Form einer koagulierten Mischung mit Komponente B) eingesetzt wird.

**5.** Formmassen gemäß Anspruch 1, enthaltend Additive ausgewählt aus der Gruppe der Stabilisatoren, Farbstoffe, Pigmente, Fließmittel, Füll- und Verstärkungsstoffe, Gleit- und Entformungsmittel, Nukleiermittel und Antistatika.

**6.** Verwendung von Formmassen gemäß Anspruch 1 zur Herstellung von Formkörpern.

**7.** Formkörper, hergestellt aus Formmassen gemäß Anspruch 1.

**Claims**

**1.** Thermoplastic moulding compositions containing

A) from 5 to 90 parts by weight of block copolycarbonates consisting of polycarbonate blocks and from 0.5 to 30 wt.%, (referred to the block copolycarbonate) of polyisobutylene alpha-haloketocarboxylic acid blocks, wherein the polyisobutylene alpha-haloketocarboxylic acid blocks have average molecular weights $\overline{M}_n$ (number average) of between 500 and 50,000, halogen contents (chlorine or bromine) prior to incorporation of between 0.1 and 15 wt.% (referred to the PIB block) and acid numbers of between 2 and 250 mg KOH/g,

B) from 5 to 95 parts by weight of graft polymer of a mixture of

B.1.1 from 50 to 95 parts by weight of styrene, $\alpha$-methylstyrene, styrene ring-substituted by halogen or methyl, $C_1$-$C_8$ alkyl acrylate, in particular methyl acrylate, or mixtures of these compounds and

B.1.2 from 5 to 50 parts by weight of acrylonitrile, methacrylonitrile, $C_1$-$C_8$ alkyl methacrylates, $C_1$-$C_8$ alkyl acrylate, maleic anhydride, $C_1$-$C_4$ alkyl- or phenyl-N-substituted maleimide or mixtures of these compounds on

B.2 from 5 to 95 parts by weight of polymer based on diene and/or alkyl acrylate, having a glass transition temperature of below -10°C,

C) from 0 to 20 parts by weight of rubber different from B)

D) from 0 to 70 parts by weight of a copolymer consisting of

D.1) from 50 to 98 parts by weight of styrene, α-methylstyrene, ring-substituted styrenes, $C_1$-$C_8$ alkyl methacrylates, $C_1$-$C_8$ alkyl acrylates or mixtures thereof and

D.2) from 50 to 2 parts by weight of acrylonitrile, methacrylonitrile, $C_1$-$C_8$ alkyl methacrylates, $C_1$-$C_8$ alkyl acrylates, maleic anhydride, N-substituted maleimides and mixtures thereof,

E) from 0 to 80 parts by weight of aromatic polycarbonate,

F) from 1 to 20 parts by weight of monomeric or oligomeric phosphate esters or phosphonate esters having molar masses of from 250 to 10,000 g/mol,

G) from 0.05 to 5, preferably from 0.1 to 1, parts by weight of fluorinated polyolefin,

wherein the sum of the components A + B + C + D + E + F + G totals 100.

**2.** Moulding compositions according to claim 1, wherein component F) comprises phosphorus compounds of formula (III)

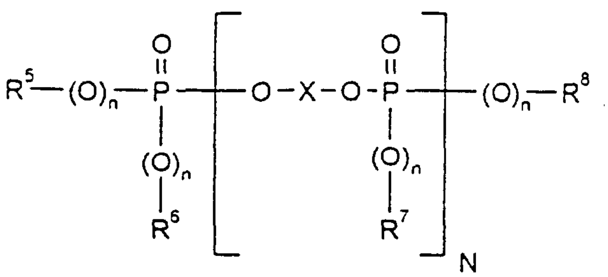

(III),

wherein

| | |
|---|---|
| $R^5$, $R^6$, $R^7$, $R^8$ | independently of one another signify $C_1$-$C_8$ alkyl, $C_5$-$C_6$ cycloalkyl, $C_6$-$C_{10}$ aryl or $C_7$-$C_{12}$ aralkyl, wherein the aromatic groups in $R^5$, $R^6$, $R^7$ and $R^8$ may for their part be substituted by halide groups or alkyl groups, |
| X | signifies a mononuclear or polynuclear aromatic group having 6 to 30 C atoms, |
| n | independently of one another is 0 or 1, |
| N | represents values of between 0 and 12. |

**3.** Moulding compositions according to claim 2, wherein $R^5$, $R^6$, $R^7$, $R^8$ independently of one another represent cresyl, phenyl, xylenyl, methylphenyl, propylphenyl, butylphenyl or isooctylphenyl as well as chlorinated and brominated derivatives thereof, and X is derived from bisphenol A, resorcinol or hydroquinone.

**4.** Moulding compositions according to claim 1, wherein component G) is used in the form of a coagulated mixture with component B).

**5.** Moulding compositions according to claim 1, containing additives selected from the list of stabilisers, dyes, pigments, flow control agents, fillers and reinforcing materials, lubricants and mould release agents, nucleating agents and/or antistatic agents.

**6.** Use of the moulding compositions according to claim 1 for the production of mouldings.

**7.** Mouldings produced from moulding compositions according to claim 1.

**Revendications**

**1.** Matières de moulage thermoplastiques contenant

A) de 5 à 90 parties en poids de copolycarbonates séquencés constitués de séquences polycarbonate et de 0,5 à 30% en poids (rapportés au copolycarbonate séquencé) de séquences d'acide polyisobutylène-alpha-halogéno-cétocarboxylique, les séquences d'acide polyiso-butylène-alpha-halogéno-cétocarboxylique présentant des poids moléculaires moyens Mn (moyens en nombre) compris entre 500 et 50 000, des teneurs en halogène (chlore ou brome) comprises avant l'insertion entre 0,1 et 15% en poids (rapportés à la séquence PIB) et des indices d'acidité compris entre 2 et 250 mg de KOH/g,
B) de 5 à 95 parties en poids de polymère greffé d'un mélange constitué

B.1.1 de 50 à 95 parties en poids de styrène, d'α-méthylstyrène, de styrène substitué au noyau par un atome d'halogène ou par un groupe méthyle, de méthacrylate d'alkyle en $C_1$-$C_8$, d'acrylate d'alkyle en $C_1$-$C_8$, en particulier de méthacrylate, ou de mélanges de ces composés et
B.1.2 de 5 à 50 parties en poids d'acrylonitrile, de méthacrylonitrile, de méthacrylates d'alkyles en $C_1$-$C_8$, d'acrylate d'alkyle en $C_1$-$C_8$, d'anhydride d'acide maléique, de maléinimides N-substitués par un groupe alkyle en $C_1$-$C_4$ respectivement phényle ou de mélanges de ces composés sur
B.2 de 5 à 95 parties en poids de polymère à base de diène et/ou d'acrylate d'alkyle présentant une température de transition vitreuse inférieure à -10°C.

C) de 0 à 20 parties en poids de caoutchouc différent de B)
D) de 0 à 70 parties en poids d'un copolymère constitué

D. 1 de 50 à 98 parties en poids de styrène, d'α-méthylstyrène, de styrènes substitués aux noyaux, de méthacrylates d'alkyles en $C_1$-$C_8$, d'acrylates d'alkyles en $C_1$-$C_8$ ou de mélanges de ceux-ci et
D.2 de 50 à 2 parties en poids d'acrylonitrile, de méthacrylonitrile, de méthacrylates d'alkyles en $C_1$-$C_8$, d'acrylates d'alkyles en $C_1$-$C_8$, d'anhydride d'acide maléique, de maléinimides N-substitués et de mélanges de ceux-ci,

E) de 0 à 80 parties en poids de polycarbonate aromatique,
F) de 1 à 20 parties en poids d'ester d'acide phosphorique ou d'ester d'acide phosphonique monomère ou oligomère présentant des masses molaires de 250 à 10 000 g/mol,
G) de 0,05 à 5, de préférence de 0,1 à 1 partie en poids de polyoléfine fluorée, la somme des constituants A + B + C + D + E + F + G étant égale à 100.

**2.** Matières de moulage selon la revendication 1, comprenant les composés du phosphore de la formule (III) en tant que constituant F)

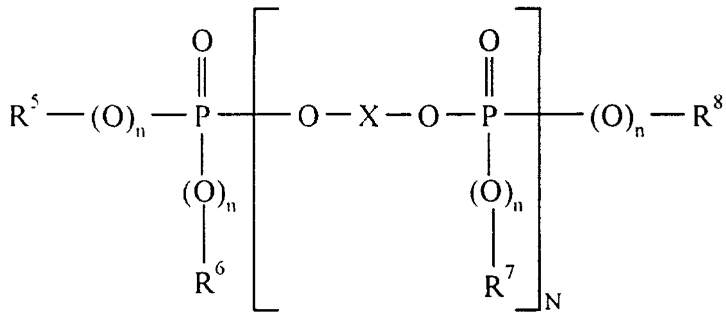

(III),

dans laquelle

| | |
|---|---|
| $R^5$, $R^6$, $R^7$, $R^8$ | peuvent être indépendamment un groupe alkyle en $C_1$-$C_8$, cycloalkyle en $C_5$-$C_6$, aryle en $C_6$-$C_{10}$ ou aralkyle en $C_7$-$C_{12}$, les groupes aromatiques dans $R^5$, $R^6$, $R^7$ et $R^8$ pouvant de leur part être substitués par un atome d'halogène ou par des groupes alkyle, |
| X | représente un reste aromatique à un ou à plusieurs noyaux avec de 6 à 30 atomes de C, |
| n | est indépendamment égal à 0 ou à 1, |
| N | représente des valeurs comprises entre 0 et 12. |

**3.** Matières de moulage selon la revendication 2, $R^5$, $R^6$, $R^7$, $R^8$ représentant indépendamment un groupe crésyle, phényle, xylényle, méthylphényle, propylphényle, butylphényle ou isooctophényle ainsi que des dérivés chlorés et bromés de ceux-ci et X est dérivé du bisphénol A, de la résorcine ou de l'hydroquinone.

**4.** Matières de moulage selon la revendication 1, le constituant G) étant utilisé dans la forme d'un mélange coagulé avec le constituant B).

**5.** Matières de moulage selon la revendication 1, contenant des additifs choisis parmi des stabilisateurs, des colorants, des pigments, des agents d'écoulement, des matières de remplissage et de renforcement, des agents lubrifiants et de démoulage, des agents de nucléation et des agents antistatiques.

**6.** Utilisation des matières de moulage selon la revendication 1 pour la préparation de corps moulés.

**7.** Corps moulés préparés à partir de matières de moulage selon la revendication 1.